Europäisches Patentamt

European Patent Office

Office européen des brevets

(11) Veröffentlichungsnummer: **0 246 466**

A2

# (12) EUROPÄISCHE PATENTANMELDUNG

(21) Anmeldenummer: 87106121.4

(22) Anmeldetag: 28.04.87

(51) Int. Cl.³: **G 03 B 27/46**
G 03 B 27/58, G 06 F 3/00
G 06 K 15/12

(30) Priorität: 10.05.86 DE 3615780

(43) Veröffentlichungstag der Anmeldung:
25.11.87 Patentblatt 87/48

(84) Benannte Vertragsstaaten:
DE FR GB IT

(71) Anmelder: Agfa-Gevaert AG
Patentabteilung
D-5090 Leverkusen 1(DE)

(72) Erfinder: Theer, Anton, Ing.grad.
Bozener Strasse 5
D-8000 München 90(DE)

(72) Erfinder: Demant, Michael
Hans-Jakob-Strasse 125
D-8000 München 82(DE)

(72) Erfinder: Webersik, Heinz, Ing. grad.
Klobensteinerstrass 1b
D-8000 München 90(DE)

(54) Laser-Mikrofilmkamera für Computerausgabe.

(57) Eine Laser Computer Output Mikrofilm (COM)-Kamera zur Verwendung von Direct Read After Write (DRAW)-Film mit einer Filmbühne, in der der Film bildschrittweise ggf. hin- und herbewegbar ist und die senkrecht zur Bewegungsrichtung des Films bildschrittweise hin- und herbewegbar ist, mit einer Filmvorratsvorrichtung vor der Bildbühne und mit einer Auffangvorrichtung für auf dem Film entstandene, gebrauchsfertige Mikrofiches, wobei der computergesteuerte Laserstrahl ablenkbar ist und mittels eines Objektivs scharf auf die Filmbühne bzw. auf in ihr enthaltenen Film abgebildet wird, ist so ausgebildet, daß die Vorratsvorrichtung (1) ein oben oder unten zumindest teilweise offener Stapelbehälter (1) ist, in den der Film als Mikroficheblattfilm stapelweise bevorratet wird und blattweise transportierbar ist, und daß der Stapelbehälter (1) kamerafest angeordnet ist und die Bewegung der Filmbühne (6, 7) und des Blattfilms in der Filmbühne (6) mittels einer Steuervorrichtung (35) steuerbar ist. Hierdurch sind mit vergleichsweise einfachen Mitteln einerseits die Herstellung eines Mikrofiches und andererseits die nachträgliche Aufbelichtung einzelner Mikrobilder auf einen Mikrofiche möglich.

./...

AGFA-GEVAERT          - 1 -
Aktiengesellschaft                    D-5090 Leverkusen 1

Patentabteilung


                                      eh-se

C246466

-8.05.88

Laser Computer Output Mikrofilm-Kamera

---

Die Erfindung betrifft eine Laser Computer Output Mikrofilm (COM)-Kamera zur Verwendung von Direct Read
After Write (DRAW)-Film mit einer Filmbühne, in der der
Film bildschrittweise mittels einer Filmtransportvorrichtung in einer Richtung ggf. hin- und herbewegbar
ist und die senkrecht zur Bewegungsrichtung des Films
parallel zur Filmebene ebenfalls bildschrittweise
hin- und herbewegbar ist, mit einer Filmvorratsvorrichtung vor der Bildbühne und mit einer Auffangvorrichtung
für aus dem Film entstandene, gebrauchsfertige Mikrofiches, wobei der computergesteuerte Laserstrahl im Bereich des Bildfeldes eines Mikrofichebildes mittels
eines drehbaren Polygonspiegels vom Zeilenanfang zum
Zeilenende und zurück und mittels eines Schwingspiegels
in Richtung der nächsten Zeile und zurück ablenkbar ist
und mittels eines Objektives scharf auf die Filmbühne
bzw. auf in ihr enthaltenen Film abgebildet wird.


A-G 5143

Beispielsweise durch die US-PS 44 27 292 ist eine Mikrofiche-Aufnahmekamera bekannt, bei der lichtempfindlicher Blattfilm aus einer Kassette in eine Aufnahmebühne und zurück in die Kassette transportiert und anschließend entwickelt wird. Der Blattfilm wird dabei mittels eines Transportrollenpaares schrittweise unter oder über einem Abbildungsobjektiv vorbeigeführt, wobei jeweils eine ganze Vorlagenseite in ein Mikrobild verkleinert wird, so daß in Transportrichtung Bildreihen entstehen. Die senkrecht zur Transportrichtung angeordneten Bildspalten werden durch schrittweise Verschiebung der ganzen Vorrichtung senkrecht zur Transportrichtung erzeugt. Diese Art von bekannten Mikrofiche-Aufnahmekameras hat den Nachteil, daß auf einem hergestellten Mikrofiche keine Ergänzungen vorgenommen werden können.

Es ist auch schon ein Verfahren unter Verwendung eines thermisch zu behandelnden, lichtempfindlichen Mikrofichematerials bekannt geworden, bei dem jedes einzelne Bild durch thermische Vorbehandlung unmittelbar vor der Belichtung erst lichtempfindlich gemacht, dann belichtet und durch thermische Nachbehandlung entwickelt und fixiert wird. Da hierbei jeweils nur das Bildfeld eines einzelnen zu belichtenden Mikrobildes sensibilisiert und anschließend belichtet und entwickelt und erst bei Bedarf das nächste Bildfeld in gleicher Weise behandelt wird, ist es nach diesem Verfahren möglich, eine Reihe von Mikrobildern eines Vorgangs (z.B. Aktenteile) auf einen Mikrofiche aufzunehmen und bei Weiterführung des Vorganges (z.B. der Akte) weitere zugehörige Mikrobil-

A-G 5143

der später auf demselben Fiche hinzuzufügen. Dieses Verfahren setzt nicht nur eine etwas aufwendige Behandlung jedes einzelnen herzustellenden Mikrobildes auf einem Mikrofiche voraus. Auch das Aufbringen von Ergänzungen auf einem, beispielsweise nicht voll ausgenutzten Mikrobild ist nicht möglich, weil nach der Sensibilisierung, Belichtung und Entwicklung eines Mikrobildes dieses nicht noch einmal lichtempfindlich gemacht werden kann.

Schließlich ist ein Laser COM-System bekannt (Journal of Applied Photographic Engineerung, Band 9, Februar 1983), bei dem eine auf eine durchsichtige Unterlage aufgebrachte und mit einer durchsichtigen Schutzschicht abgedeckte Metallschicht als Rollfilm verwendet wird. Der computergesteuerte Laserstrahl wird je Bild punktweise zu Zeilen und Spalten auf dieses sogenannte DRAW-Material (Direct Read After Write-Material) gerichtet und schmilzt dabei Punkte von 0.1-1 $\mu$ Durchmesser aus der Metallschicht, so daß der Film an den laserstrahl-belichteten Stellen durchsichtig wird. Der Rollfilm wird ggf. nach der Belichtung zu Mikrofichen geschnitten. Dieses System hat den Vorteil, daß keine Filmentwicklung mehr erforderlich ist und die Anordnung des Materials bei völligem Tageslicht erfolgen kann. Jedoch ist es auch mit dieser bekannten Vorrichtung nicht möglich, auf einen einzelnen nur mit der nicht maximalen Zahl von Mikrobildern belichteten Mikrofiche weitere Mikrobilder nachträglich aufzubringen, um dadurch beispielsweise zeitlich fortlaufend geführte Akten zeitlich nacheinander und zusammengehörig zu mikro-

A-G 5143

verfilmen. Erst recht ist es auch mit dieser bekannten Vorrichtung nicht möglich, einzelne Mikrobilder nachträglich noch zu ergänzen. Außerdem ist bei dieser bekannten Anordnung nachteilig, daß sowohl die Filmbühne als auch die Filmvorratsrolle quer zur Filmtransportrichtung bewegt werden müssen.

Der Erfindung liegt daher die Aufgabe zugrunde, eine Vorrichtung der eingangs genannten Art so fortzubilden, daß einerseits die Herstellung von Mikrofichen ohne Bewegung des Filmvorrats quer zur Filmtransportrichtung möglich ist und daß andererseits die nachträgliche Aufbelichtung einzelner Mikrobilder auf einen nicht über seine ganze Bildfläche mit Mikrobildern besetzten Mikrofiche und außerdem die nachträgliche Ergänzung einzelner bereits aufgenommener Mikrobilder möglich ist.

Diese Aufgabe wird erfindungsgemäß gelöst durch die Merkmale des Hauptanspruchs. Weitere vorteilhafte Merkmale der Erfindung sind den Unteransprüchen entnehmbar.

Durch die Zuführung des Films als Blattfilmmaterial in einem Vorratsstapelbehälter, der kamerafest angeordnet ist, ist die Zahl der beim Filmtransport zu bewegenden Teile geringer geworden. Infolge der geringeren zu bewegenden Massen ist hierdurch die erforderliche exakte Bewegung des Films gegenüber dem Objektiv leichter zu erreichen. Außerdem können von Hand in den Stapelbehälter in entsprechender Reihenfolge einzelne bereits belichtete Mikrofiches oder Stapel von belichteten Mikrofichen eingegeben werden, um sie computergesteuert zu ergänzen.

A-G 5143

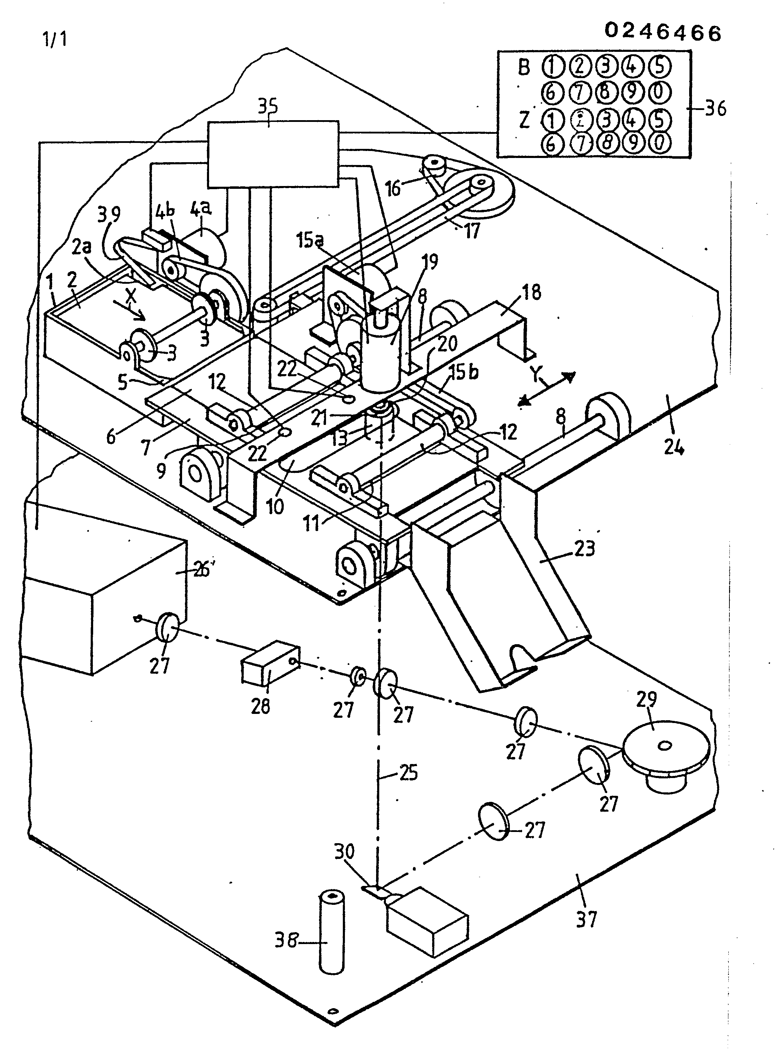

Die Erfindung wird anhand einer Zeichnung näher erläutert. Die einzige Figur zeigt eine teilweise abgebrochene, perspektivische Darstellung einer erfindungsgemäßen Laser COM-Kamera.

In einem feeder-ähnlich ausgebildeten Stapelbehälter 1 wird durch einen gefederten Steigtisch 2 irgendeiner bekannten Bauart ein Pack Filme im Microfiche-Format gegen Transporträder 3 gedrückt, welche, mittels eines Antriebs 4a, 4b in Pfeilrichtung X bewegt, das oberste Filmblatt über Eckentrenner 5 vom restlichen Filmpack trennen und in die Filmlaufbahn 6 einer als Schlitten 7 ausgebildeten Filmbühne transportieren.

Der auf Stangenführungen 8 gelagerte und in Y-Richtung mittels eines Antriebs 16, 17 bewegbare Schlitten 7 weist Durchbrüche 9, 10, 11 auf, in welche jeweils ein Transportrollenpaar 12 bzw. ein Objektiv 13 ragen. Mittels der Rollenpaare 12 wird der nicht gezeigte Film in X-Richtung transportiert. Das Objektiv 13 liegt zwischen den Rollenpaaren 12, deren Abstand ist kleiner als die Länge des Filmblattes in Transportrichtung X. Die Rollenpaare 12 werden von einem Antrieb 15a, 15b, der auf dem Schlitten 7 gelagert ist, synchron angetrieben.

Über dem Schlitten 7 ist nahe dem ersten Rollenpaar 12 eine Brücke 18 starr angeordnet, welche die Aufgabe hat, einen Hubmagneten 19 mit einem Andruckstempel 20 zu halten, mittels welchem der Film während der Belichtung bzw. Beschriftung gegen eine Planfläche 21 des Ob-

A-G 5143

jektivs 13 angedrückt wird. Die Brücke 18 weist ferner Lichtschranken 22 auf, die eine genaue Positionierung des Filmes zum Objektiv 13 gewährleisten bzw. der Steuerung der Antriebe für die Filmbühne 7 und den Film auslösen.

Hinter dem Feeder 1 und dem Schlitten 7 ist ein Auffangbehälter 23 für die fertigen Fiches auf einer Trägerplatine 24 zusammen mit den anderen Teilen für den Filmtransport gelagert.

Die in der Figur gezeigten Antriebe 4a, 4b bzw. 16, 17 bzw. 15a, 15b sind als mit Schrittschaltmotoren 4a bzw. 16 bzw. 15a gekoppelte Endlos-Riementriebe 4b bzw. 17 bzw. 15b ausgebildet, könnten aber statt dessen auch auf jede andere bei Mikrofichebühnen bereits bekannte Weise ausgebildet sein. Die Motoren 4a, 16, 15a, der Magnet 19, die Lichtschranken 22 sowie eine computergesteuerte, an sich bekannte Laserstrahlvorrichtung, die nachfolgend noch beschrieben werden wird, sind mit einer elektronischen Steuervorrichtung 35 verbunden. Diese Steuervorrichtung 35 und/oder die Computersteuerung für den Laser sind mit einer Auswahlvorrichtung 36 gekoppelt.

Das in dem Stapelbehälter oder Feeder 1 zu bevorratende Blattfilmmaterial hat, wie bereits erwähnt, das Format von Mikrofichen und besteht aus irgendeiner Art von durch Laserstrahlen zu beschriftendem DRAW-Material, z.B. einer beidseitig durchsichtig beschichteten Metallschicht, die an den Stellen, an denen sie von La-

A-G 5143

serstrahlen getroffen wird, wegschmilzt, so daß an diesen Stellen der Film durchsichtig wird. Der Durchmesser eines Laserstrahles ist so gering, daß durch das Objektiv 13 nur Punkte von 0,1 bis 1 $\mu$ Durchmesser auf dem Film abgebildet werden.

In der Ausgangsstellung fluchten der Feeder 1 und die Filmlaufbahn 6 miteinander und mit dem Auffangbehälter 23. Ein unbelichteter oder nur teilweise belichteter Mikrofiche wird zur Beschriftung aus dem Feeder 1 von den Rollen 3 in die Filmbühne 6, 7 transportiert und dann vom ersten Transportrollenpaar 12 erfaßt und weitertransportiert. Erreicht die Stirnkante des Mikrofiches die Abtastvorrichtung 22, so werden über die Steuervorrichtung 35 die Schrittschaltantriebe 15a, 15b und 16, 17 gesteuert, so daß bei einem unbelichteten Mikrofiche zuerst das erste Bildfeld der zu erstellenden Mikrobilder dem Objektiv 13 zugeordnet wird. Nach dessen Belichtung wird die Filmbühne 6, 7 schrittweise von Bildfeld zu Bildfeld und damit Bild zu Bild in Y-Richtung verfahren. Am Ende der ersten so erstellten Mikrobildspalte wird der Film um einen Bildschritt in X-Richtung bewegt und dann wird die Filmbühne 6, 7 wieder bildweise in Y-Richtung verfahren. Dabei ist es möglich, bei jeder neuen Bildspalte die Filmbühne zuerst in Y-Richtung zurückzufahren und dann wieder in Richtung der Belichtungsfolge in Y-Richtung zu verschieben. Dies ist wegen der Bildfolge der günstigere Weg. Grundsätzlich ist es aber auch möglich, die einzelnen Mikrobilder mäanderförmig aneinanderzureihen oder zuerst die Bildreihen in X-Richtung herzustellen und dann in Y-Richtung die zur X-Richtung parallelen weiteren Reihen zu erzeugen.

Sind nun von einem Vorgang mehrere Seiten mikroverfilmt und sind auf dem entsprechenden Mikrofiche noch unbelichtete Bildfelder vorhanden, so können weitere Schriftstücke dieses Vorganges auf dem entsprechenden Mikrofiche auf den freien Bildfeldern dadurch verfilmt werden, daß der Mikrofiche oder mehrere entsprechende Mikrofiche oben in den Feeder eingegeben werden. Nach dem Transport des entsprechenden Mikrofiches in die Filmbühne 6, 7 wird dann auf einer Auswahlvorrichtung 36, die als gesondertes Schaltpult in der Kamera vorhanden sein oder die Tastatur des Computerbildschirms sein kann, das Bildfeld des Mikrofiches angewählt und über die Antriebsvorrichtung 15a, 15b bzw. 16, 17 zum Objektiv 13 eingestellt, auf dem die Mikroverfilmung weitergeführt werden soll. Dabei kann in bekannter Weise ein weiterer Bildschirm vorgesehen sein, mit dem der zu beschreibende Mikrofilm auf seinen Zustand überprüft bzw. gelesen werden kann.

Nach Beendigung der Belichtung eines Mikrofiches wird die Filmbühne 6, 7 mittels der Steuervorrichtung 35 und der Antriebsvorrichtung 16, 17 wieder auf den Feeder 1 und den Auffangbehälter 23 ausgerichtet. Der fertig belichtete Mikrofiche wird dann mittels des zweiten Transportrollenpaares 12 in den Auffangbehälter 23 transportiert, so daß vom Feeder ein weiterer Mikrofiche in die Filmbühne 6, 7 eingeführt werden kann. Die Steuerung der Zu- und Abführung der zu belichtenden

A-G 5143

bzw. belichteten Mikrofiches erfolgt zweckmäßigerweise auch von der Auswahlvorrichtung 36 bzw. vom Computerbildschirm aus. Während der Belichtung der einzelnen Mikrobilder drückt jeweils der magnetisch gesteuerte Andruckstempel 20 das Mikrobild gegen das Objektiv 13. Bei jeglichem Transport ist dieser Stempel 20, gesteuert durch die Steuervorrichtung 35, vom Film abgehoben, damit dieser nicht beschädigt wird.

Die Beschriftung der einzelnen Mikrobilder erfolgt durch einen computergesteuerten Laserstrahl 25, welcher von einer computergesteuerten Lasereinheit 26 über ein optisches System 27, einen bekannten Acousto-Optic-Modulator 28, einen Polygonspiegel 29 und einen Schwingspiegel 30 durch das Objektiv 13 auf den Film gelangt. Dabei steuert der ebenfalls automatisch, elektronisch gesteuerte Polygonspiegel 29 die Bewegung des Laserstrahles 25 jeweils vom Zeilenanfang zum Zeilenende des Mikrobildes, während der Schwingspiegel 30 den Laserstrahl von Zeile zu Zeile des Mikrobildes führt. Hierdurch ist aufgrund der Verwendung eines Feeders 1 für Blattfilme im Mikroficheformat nicht nur die Eingabe und Weiterbelichtung schon teilweise belichteter Mikrofiches möglich, sondern es läßt sich für die weitere Aufzeichnung auch auf einem einzelnen, angewählten Mikrobild eine bestimmte Zeile über die Auswahlvorrichtung 36 durch die entsprechende Einstellung des Schwingspiegels 30 und/oder des Polygonspiegels 29 einstellen, von der aus dann computergesteuert zusätzliche Aufzeichnungen auf dieses angewählte Mikrobild aufgebracht werden können. Eine entsprechende Auswahleinrichtung 36 weist daher zweckmäßigerweise zwei Zahlenreihen 0 bis 9 auf, von denen die mit B bezeichnete Zahlenreihe der Bildauswahl und die mit Z bezeichnete Zahlenreihe der Zeilenauswahl für bereits belichtete und zu ergänzende Mikrofiche zugeordnet ist.

Der Einfachheit halber ist gemäß der Figur die Laseranordnung auf einer unter der Trägerplatine 24 angeordneten weiteren Trägerplatinen 37 angeordnet, wobei beide Platinen 24, 37 durch Distanzbolzen 38 beabstandet sind. In der Praxis wird man den Laserteil und ggf. die Filmbühne 6, 7 mit Antrieben in einem geschlossenen Gehäuse unterbringen, während Feeder 1 und Auffangbehälter 23 frei zugänglich liegen können. Anstelle eines Rollenantriebes 3 zur Aufnahme der einzelnen Filmblätter aus dem Feeder 1 könnten auch hierzu bekannte Sauger verwendet werden. Weiterhin ist es möglich, einen Taster 39 vorzusehen, der bei im Feeder 1 fehlendem Blattfilm in eine Ausnehmung 2a des Steigtisches 2 einfällt und über die Steuervorrichtung 35 die Antriebe 4a, 16, 15a und/oder ggf. die ganze Anlage abschaltet. Außerdem wäre es möglich, in an sich bekannter Weise einen Stapelbehälter 1 zu verwenden, in dem jeweils das unterste Filmblatt eines Stapels von der Stapelunterseite abgezogen wird. Schließlich ist es möglich, der Filmbühne 6 eine weitere Abtastvorrichtung zuzuordnen, die einen in die Filmbühne eingegebenen Mikrofiche nach unbelichteten, also freien Bildfeldern abtastet und über die Steuervorrichtung 35 und die Antriebsvorrichtungen dieses freie Bildfeld auf das Objektiv 13 einstellt. Es kann auch günstig sein, wenn

A-G 5143

jedem Mikrobild bei der ersten Belichtung eine Positionsmarke aufbelichtbar ist, der eine mit der Steuervorrichtung 35 verbundene Positionsabtastvorrichtung zugeordnet ist, durch die ein zu ergänzendes Mikrobild in seine bei der ersten Belichtung gegenüber dem Objektiv 13 vorhandene Stellung mittels der Transportvorrichtung 15a, 16 steuerbar ist.

A-G 5143

Ansprüche

1. Laser Computer Output Mikrofilm (COM)-Kamera zur Verwendung von Direct Read After Write (DRAW)-Film mit einer Filmbühne, in der der Film bildschrittweise mittels einer Filmtransportvorrichtung in einer Richtung ggf. hin- und herbewegbar ist und die senkrecht zur Bewegungsrichtung des Films parallel zur Filmebene ebenfalls bildschrittweise hin- und herbewegbar ist, mit einer Filmvorratsvorrichtung vor der Bildbühne und mit einer Auffangvorrichtung für aus dem Film entstandene, gebrauchsfertige Mikrofiches, wobei der computergesteuerte Laserstrahl im Bereich des Bildfeldes eines Mikrofichebildes mittels eines drehbaren Polygonspiegels vom Zeilenanfang zum Zeilenende und zurück und mittels eines Schwingspiegels in Richtung der nächsten Zeile und zurück ablenkbar ist und mittels eines Objektives scharf auf die Filmbühne bzw. auf in ihr enthaltenen Film abgebildet wird, dadurch gekennzeichnet, daß die Vorratsvorrichtung (1) ein oben oder unten zumindest teilweise offener Stapelbehälter (1) ist, in den der Film als Mikroficheblattfilm stapelweise bevorratet wird und blattweise mittels Transportrollen (3) oder Saugern und einem Transportwalzenpaar (12) der Filmbühne (6) transportierbar ist, und daß der Stapelbehälter (1) kamerafest angeordnet ist und die Be-

A-G 5143

wegung der Filmbühne (6, 7) und des Blattfilms in der Filmbühne (6) sowie die Rückstellung der Filmbühne (6, 7) nach der Fertigstellung des Mikrofiches in eine dem Stapelbehälter (1) zugeordnete, beladbare Position mittels einer Steuervorrichtung (35) steuerbar ist.

2. Kamera nach Anspruch 1, dadurch gekennzeichnet, daß die Auffangsvorrichtung (23) als Auffangkorb ausgebildet und ebenfalls kamerafest in der Verlängerung des Stapelbehälters (1) hinter der Filmbühne (6) angeordnet ist.

3. Kamera nach einem der vorhergehenden Ansprüche, dadurch gekennzeichnet, daß der oben offene Stapelbehälter (1) in seinem Boden als Steigtisch (2) zum automatischen Anheben des jeweils obersten Stapelblattes auf die Transportebene des Transportwalzenpaares (12) ausgebildet ist.

4. Kamera nach Anspruch 3, dadurch gekennzeichnet, daß einer Ausnehmung (2a) im Steigtisch (2) ein Abtaster (39) zugeordnet ist, durch den bei fehlenden Blattfilmen über die Steuervorrichtung (35) die Filmtransportvorrichtung (3, 12, 17) oder die ganze Kamera abschaltbar ist.

5. Kamera nach einem der vorhergehenden Ansprüche, dadurch gekennzeichnet, daß die Filmtransportvorrichtung (3, 12, 17) ein weiteres, filmbühnenseitiges Transportwalzenpaar aufweist, des-

A-G 5143

sen Abstand vom ersten filmbühnenseitigen Walzenpaar (12) etwas geringer ist als die Länge des Blattfilms in dessen Transportrichtung (X).

6. Kamera nach einem der vorhergehenden Ansprüche, dadurch gekennzeichnet, daß zwischen den Transportwalzenpaaren (12) nahe dem ersten Transportwalzenpaar in einem definierten Abstand vom Objektiv (13) eine mit der Steuervorrichtung (35) verbundene Abtastvorrichtung (22) für in die Filmbühne (6) eingeführten Blattfilm angeordnet ist, von der aus durch die Steuervorrichtung (35) die Bildschritte in den Transportrichtungen (X und Y) für den Blattfilm und die Filmbühne (6, 7) zählbar sind.

7. Kamera nach einem der vorhergehenden Ansprüche, dadurch gekennzeichnet, daß mit der Steuervorrichtung (35) und/oder dem den Laser (26) steuernden Computer eine Auswahlvorrichtung (36), wie eine Tastatur, verbunden ist, durch die einzelne, beispielsweise noch nicht belichtete Bildfelder eines in die Filmbühne (6) zu transportierenden Mikrofiches dem Objektiv (13) und damit der weiteren Belichtung durch den Laser (26) zuordenbar sind.

8. Kamera nach Anspruch 7, dadurch gekennzeichnet, daß durch die Auswahlvorrichtung (36) der Polygonspiegel (29) und der Schwingspiegel (30) einzelnen, beispielsweise noch nicht belichte-

0246466

ten Zeilen eines dem Objektiv (13) zugeordneten Bildfeldes eines in der Filmbühne (6) befindlichen Mikrofiches zuordenbar ist.

9. Kamera nach Anspruch 8, dadurch gekennzeichnet, daß jedem Mikrobild bei der ersten Belichtung eine Positionsmarke aufbelichtbar ist, der eine mit der Steuervorrichtung 35 verbundene Positionsabtastvorrichtung zugeordnet ist, durch die ein zu ergänzendes Mikrobild in seine bei der ersten Belichtung gegenüber dem Objektiv 13 vorhandene Stellung mittels der Transportvorrichtung 15a, 16 steuerbar ist.

10. Kamera nach einem der vorhergehenden Ansprüche, dadurch gekennzeichnet, daß im Bereich der Filmbühne eine weitere, mit der Steuervorrichtung (35) verbundene Abtastvorrichtung vorgesehen ist, durch die das nächste unbelichtete Bildfeld eines teilweise belichteten, in der Filmbühne angeordneten Mikrofiches erkennbar ist, und daß mittels der Steuervorrichtung (35) die Filmtransportvorrichtung so antreibbar ist, daß ein derartiges unbelichtetes Bildfeld in den Bereich des Objektives (13) bewegbar ist.

Hierzu 1 Blatt Zeichnungen

A-G 5143